# EUROPEAN PATENT SPECIFICATION

(11) **EP 0 684 280 B1**
(45) Date of publication and mention of the grant of the patent: **25.11.1998**
(21) Application number: 95303442.8
(22) Date of filing: 23.05.1995
(51) Int. Cl.: C08K 13/02, C08L 23/10, C08L 53/00

(54) **Crystalline propylene polymer composition having inhibited color developability**
Kristalline Propylenpolymer-Zusammensetzung mit verringerter Verfährungsneigung
Composition de polymère propylénique cristalline ayant un dévelopement de colorisation inhibé

(30) Priority: 24.05.1994 JP 133799/94
(43) Date of publication of application: 29.11.1995
(73) Proprietor: KYOWA CHEMICAL INDUSTRY CO., LTD., Takamatsu-shi Kagawa-ken (JP)
(72) Inventor: Nosu, Tsutomu, Takamatsu-shi, Kagawa-ken (JP); Sawa, Yoshiharu, Sakaide-shi, Kagawa-ken (JP); Yosii, Makoto, Ayauta-gun, Kagawa-ken (JP)
(74) Representative: Woods, Geoffrey Corlett

(56) References cited:
- EP-A- 0 213 788
- EP-A- 0 265 075
- US-A- 4 048 409

## Description

The present invention relates to a crystalline propylene polymer composition. More specifically, it relates to a crystalline propylene polymer composition which can give molded articles which are excellent in anti-rust effect, rigidity and heat stability and remarkably improved in color development.

A crystalline propylene polymer is a generally used resin excellent in all of moldability, mechanical properties, heat resistance and chemical stability. However, a propylene polymer has low rigidity as compared with similarly generally used polystyrene and polyvinyl chloride, and it is required to have higher rigidity in some fields.

Various methods have been proposed for imparting a propylene polymer with rigidity. Above all, it is general practice to employ a method of incorporating a crystal nucleating agent to a propylene polymer. The crystal nucleating agent is mostly selected from talc, sodium salt of benzoic acid, aluminum salt of p-tert-butylbenzoic acid and dibenzylidene sorbitol.

Meanwhile, for producing a propylene polymer at a low cost, there is a great progress in the technique of highly activating a catalyst by improving a halogen-containing Ziegler type polymerization catalyst in recent years, and as a result, the step of removing the catalyst after the polymerization is often omitted. This means that a halogen in an amount of several to hundreds ppm remains in a propylene polymer. When a propylene polymer having a residual halogen content is molded under heat, acidic components such as hydrogen halide is generated to greatly corrode a molding machine and a mold, or the resin is deteriorated.

For overcoming the above problem, JP-A-55-80447 discloses the use of hydrotalcite.

Further, JP-A-63-125551 discloses a method in which aluminum salt of p-tert-butylbenzoic acid is incorporated into a propylene polymer having a residual halogen content for improving the propylene polymer in rigidity, and further hydrotalcite is incorporated into the propylene polymer for having an anti-rust effect on the propylene polymer. The hydrotalcite disclosed in the above publications has the composition of the following formula (2).

Mg_{4.5}Al₂(OH)₁₃CO₃·3.5H₂O (2)

According to the above method, the propylene polymer is improved in rigidity and anti-rust properties, while the propylene polymer is unsatisfactory in practical use since it develops a pinkish color. Further, there is proposed a method in which metal fatty acid salt such as zinc stearate is incorporated into a propylene polymer in place of the hydrotalcite. This method has an effect on the prevention of color development, while the propylene polymer is unsatisfactory in heat stability and anti-rust effect.

It is an object of the present invention to provide a crystalline propylene polymer composition excellent in anti-rust effect and heat stability.

It is another object of the present invention to provide a crystalline propylene polymer which can give molded articles remarkably improved in rigidity and colour development.

The above objects and advantages of the present invention are achieved by a composition comprising:
(a) a crystalline propylene polymer;
(b) from 0.01 to 1 part by weight per 100 parts by weight of the crystalline propylene polymer, of an aluminum salt of p-tert-butylbenzoic acid; and
(c) from 0.001 to 1 part by weight per 100 parts by weight of the crystalline propylene polymer, of a hydrotalcite compound of formula (1),

   (Mg_{y}Zn_{z})₁₋ₓAlₓ(OH)₂(CO₃)_{x/2}.mH₂O (1)

   wherein y + z = 1, 0 ≤ y ≤ 0.9, 0.2 ≤ x ≤ 0.8 and m is 0 or a positive number.

The crystalline propylene polymer used in the present invention typically contains several to hundreds ppm of a halogen. The crystalline propylene polymer typically contains a halogen derived from a Ziegler type catalyst including a catalyst carrier such as magnesium chloride, since the step of removing the catalyst is often omitted owing to the high activation of the Ziegler type catalyst. The propylene polymer includes a propylene homopolymer and propylene copolymers such as copolymers of propylene and other α-olefins such as ethylene, 1-butene, 1-pentene and 4-methylpentene-1. Typically, the propylene polymer (a) is selected from homopolypropylene, a propylene-ethylene block or random copolymer and a propylene-ethylene-1-butene copolymer. Although differing depending upon use, the propylene polymer (a) typically has a melt flow rate (to be sometimes referred to as "MFR" hereinafter) of from 0.1 to 100 g/minute.

The aluminum salt (b) is commercially available. The amount of the aluminum salt (b) is typically from 0.01 to 1 part by weight per 100 parts by weight of the propylene polymer (a) preferably from 0.05 to 0.5 parts by weight. When the amount of the aluminum salt of p-tertbutylbenzoic acid is less than the above lower limit, a molded article from the propylene polymer composition is hardly improved in rigidity. When this amount exceeds the above upper limit, there is almost no further effect on the improvement in rigidity, which results in poor economic performance.

The hydrotalcite compound (c) preferably has a BET specific surface area of 30 m²/g or less and an average secondary particle diameter of 5 µm or less.

The above hydrotalcite compound can be produced by the method disclosed in JP-A-61-174270. For example, the hydrotalcite compound can be obtained by a method in which an alkali such as sodium hydroxide or sodium carbonate is added to, and reacted with, an aqueous solution containing inorganic acid salt of magnesium, zinc and aluminum. Further, the hydrotalcite compound having a BET specific surface area of 30 m²/g or less and an average secondary particle diameter of 5 µm or less can be obtained, for example, by treating the above-obtained hydrotalcite compound in an aqueous medium under heat at a temperature between about 80°C and about 200°C for approximately 2 to 50 hours.

Typically, the hydrotalcite compound is one which is surface-treated with at least one surface treating agent. The or each surface treating agent is typically selected from higher fatty acids such as stearic acid, higher fatty acid metal salts such as oleic acid alkali metal salt, organic sulfonic acid metal salts such as dodecylbenzenesulfonic acid alkali metal salt, higher fatty acid amides, higher fatty acid esters and wax.

The crystalline propylene polymer composition of the present invention may further contain various additives which are usually incorporated into general polyolefins. Thus, the composition of the invention typically contains at least one additive selected from phenol-containing antioxidants, organic phosphorus-containing antioxidants such as organic phosphite, thioether containing antioxidants, ultraviolet light absorbents, hindered amine- or nickel-containing light stabilizers, antistatic agents, lubricants such as calcium stearate, nucleating agents and colorants.

The crystalline propylene polymer composition of the present invention is used in the form of a molded article, a fiber, a biaxially oriented film, a sheet, or the like. The present invention therefore also provides a moulded article, a fibre, a biaxially oriented film or a sheet of a composition according to the invention. Also provided is a method of producing a moulded article, which method comprises injection moulding a composition according to the invention. When an article from the crystalline propylene polymer composition of the present invention is used outdoors, it is preferred to incorporate a hindered amine-containing light stabilizer into the composition.

The present invention will be explained more in detail hereinafter with reference to Examples, in which "part" and "%" stand for "part by weight" and "% by weight", respectively, unless otherwise specified.

### Examples 1 - 7 and Comparative Examples 1 - 5

Ethylene-propylene block copolymer (MFR 8 g/min., chlorine content 50 ppm) 100 parts
Aluminum p-tert-butylbenzoate ("AL-PTBBA" supplied by Shell Chemical) Amount as shown in Table 1
Hydrotalcite compound Amount as shown in Table 1
Calcium stearate or zinc stearate Amount as shown in Table 1
Octadecyl-3-(3,5-di-tert-butyl-4-hydroxydiphenyl)-propionate ("Irganox 1076" supplied by Ciba Geigy) 0.05 part
Cyclic neopentanetetraylbis(2,4-di-tert-butylphenyl)phosphite ("ULTRANOX626" supplied by GE) 0.05 part

The above materials were mixed with a Henschel mixer at 1,200 rpm for 5 minutes, then melt-kneaded at 230°C at 30 rpm, and melt-extruded to obtain pellets. The so-obtained pellets were used for the following rust prevention test, heat stability test, flexural modulus test and color development test.

### (a) Rust prevention test

A fully polished and degreased, mild steel plate having a size of 40 x 40 mm was buried in the pellets, heated at 230°C for 1 hour, allowed to cool and taken out of the pellets. The resin covering the plate was removed. Then, the mild steel plate was placed in a desiccator in which the humidity was adjusted to 93 % RH, and allowed to stand at 60°C for 1 week. Then, the mild steel plate was visually evaluated for a degree of rust formation.

### (b) Heat stability test

The pellets were allowed to stand in an oven at 140°C with stirring once a day, and the pellets were measured for a melt flow rate (MFR). The deterioration degree of the resin (pellets) was evaluated by counting days until the measured MFR was at least twice as high as the MFR of the initial pellets.

### (c) Flexural modulus test

The pellets were injection-molded at 240°C to prepare a test piece having size of 4 mm (thickness) x 10 mm x 130 mm. The test piece was measured for a flexural modulus according to JIS K7203.

### (d) Color development test

The pellets were injection-molded at 240°C to prepare a disk having a thickness of 2 mm and a diameter of 50 mm. The disk was measured for an a value with a color difference meter (supplied by Tokyo Denshoku K.K.). The a value shows a color change from green to red, and as the a value is on + side or come nearer to + side, the color is red or reddish.

Table 1 shows the results.

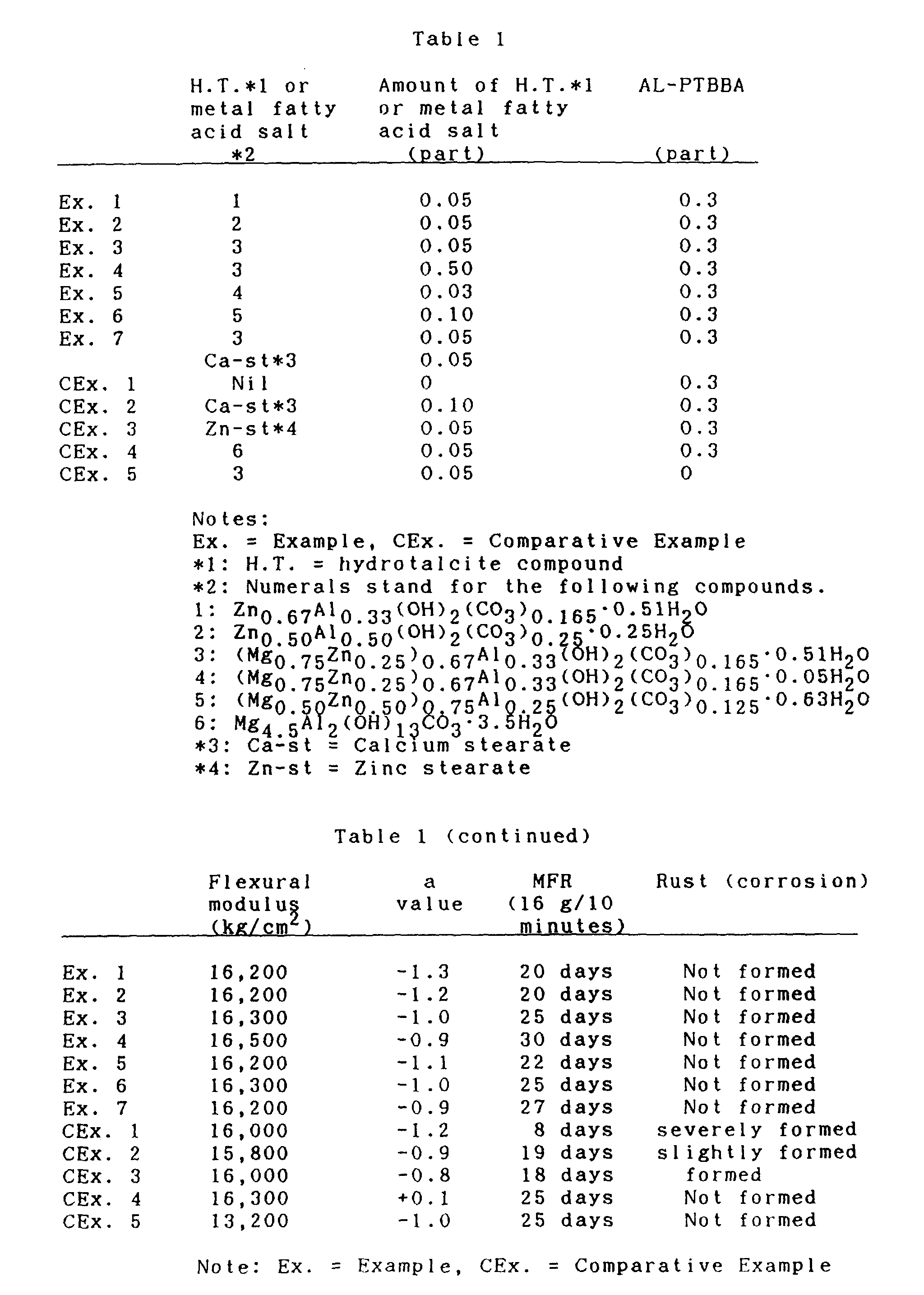

As explained above, the present invention provides a crystalline propylene polymer composition which is free from corroding a metal forming a mold, etc., and which can give molded articles free of pinkish color development and excellent in rigidity and heat stability.

As used herein, the term 'higher fatty acid' typically denotes fatty acids having from 5 to 29 carbon atoms, preferably from 10 to 21 carbon atoms. In the formula I, typically 0≤m≤1, preferably 0≤m≤0.63.

## Claims

1. A composition comprising:
(a) a crystalline propylene polymer;
(b) from 0.01 to 1 part by weight per 100 parts by weight of the crystalline propylene polymer, of an aluminum salt of p-tert-butylbenzoic acid; and
(c) from 0.001 to 1 part by weight per 100 parts by weight of the crystalline propylene polymer, of a hydrotalcite compound of formula (1),
(Mg_{y}Zn_{z})₁₋ₓAlₓ(OH)₂(CO₃)_{x/2}.mH₂O (1)
wherein y + z = 1, 0 ≤ y ≤ 0.9, 0.2 ≤ x ≤ 0.8 and m is 0 or a positive number.

2. A composition according to claim 1, wherein the hydrotalcite compound (c) has a BET specific surface area of 30 m²/g or less and an average secondary particle diameter of 5 µm or less.

3. A composition according to claim 1 or 2, wherein the hydrotalcite compound is one which is surface-treated with at least one surface treating agent.

4. A composition according to claim 3, wherein the or each surface treating agent is selected from higher fatty acids, higher fatty acid metal salts, organic sulfonic acid metal salts, higher fatty acid amides, higher fatty acid esters and wax.

5. A composition according to any one of the preceding claims wherein the propylene polymer (a) is selected from homopolypropylene, a propylene-ethylene block or random copolymer and a propylene-ethylene-1-butene copolymer.

6. A composition according to any one of the preceding claims wherein the propylene polymer (a) has a melt flow rate of from 0.1 to 100 g/minute.

7. A composition according to any one of the preceding claims which contains at least one additive selected from phenol-containing antioxidants, organic phosphorus-containing antioxidants, thioether-containing antioxidants, ultraviolet light absorbents, hindered amine or nickel containing light stabilizers, antistatic agents, lubricants, nucleating agents and colorants.

8. A composition according to any one of the preceding claims wherein the amount of the aluminum salt (b) is from 0.05 to 0.5 parts by weight per 100 parts by weight of the propylene polymer (a).

9. A moulded article, a fibre, a biaxially oriented film or a sheet of a composition according to any one of claims 1 to 8.

10. A method of producing a moulded article which method comprises injection moulding a composition according to any one of claims 1 to 8.

## Patentansprüche

1. Zusammensetzung umfassend:
(a) ein kristallines Propylenpolymer;
(b) von 0,01 bis 1 Gewichtsteil pro 100 Gewichtsteile des kristallinen Propylenpolymers an einem Aluminiumsalz von p-tert-Butylbenzoesäure; und
(c) von 0,001 bis 1 Gewichtsteil pro 100 Gewichtsteile des kristallinen Propylenpolymers einer Hydrotalcit-Verbindung gemäß Formel (1),
(Mg_{y}Zn_{z})₁₋ₓAlₓ(OH)₂(CO₃)_{x/2}·mH₂O (1)
worin y + z = 1, 0 ≤ y ≤ 0,9, 0,2 ≤ x ≤ 0,8 und m 0 oder eine positive Zahl ist.

2. Zusammensetzung gemäß Anspruch 1, wobei die Hydrotalcit-Verbindung (c) eine spezifische Oberfläche gemäß BET von 30 m²/g oder weniger besitzt und einen durchschnittlichen Sekundärteilchen-Durchmesser von 5 µm oder weniger.

3. Zusammensetzung gemäß Anspruch 1 oder 2, wobei die Hydrotalcit-Verbindung eine ist, die mit wenigstens einem Oberflächen-Behandlungsmittel oberflächenbehandelt wurde.

4. Zusammensetzung gemäß Anspruch 3, wobei das oder jedes Oberflächen-Behandlungsmittel ausgewählt ist aus höheren Fettsäuren, Metallsalzen höherer Fettsäuren, organischen Sulfonsäure-Metallsalzen, höheren Fettsäureamiden, höheren Fettsäureestern und Wachs.

5. Zusammensetzung gemäß einem der vorhergehenden Ansprüche, wobei das Propylenpolymer (a) ausgewählt ist aus Homopolypropylen, einem Propylenethylen-Block- oder statistischem Copolymer und einem Propylen-ethylen-1-buten-copolymer.

6. Zusammensetzung gemäß einem der vorhergehenden Ansprüche, wobei das Propylenpolymer (a) eine Schmelzflußrate von 0,1 bis 100 g/Min. besitzt.

7. Zusammensetzung gemäß einem der vorhergehenden Ansprüche, die wenigstens ein Additiv enthält, ausgewählt aus Phenol enthaltenden Antioxidantien, organischen Phosphor enthaltenden Antioxidantien, ultraviolettes Licht absorbierenden Absorbenzien, gehindertes Amin oder Nickel enthaltenden Lichtstabilisatoren, antistatischen Agenzien, Gleitmittel, Nucleirungsmitteln und Farbmitteln.

8. Zusammensetzung gemäß einem der vorhergehenden Ansprüche, wobei die Menge des Aluminiumsalzes (b) von 0,05 bis 0,5 Gewichtsteile pro 100 Gewichtsteile des Propylenpolymers (a) beträgt.

9. Formgegenstand, Faser, biaxial ausgerichteter Film oder eine Folie einer Zusammensetzung gemäß einem der Ansprüche 1 bis 8.

10. Verfahren zur Herstellung eines Formgegenstandes, wobei das Verfahren das Spritzgießen einer Zusammensetzung gemäß einem der Ansprüche 1 bis 8 umfaßt.

## Revendications

1. Composition comprenant :
(a) un polymère de propylène cristallin ;
(b) de 0,01 à 1 partie en poids, pour 100 parties en poids du polymère de propylène cristallin, d'un sel d'aluminium de l'acide p-tert-butyl-benzoïque ; et
(c) de 0,001 à 1 partie en poids, pour 100 parties en poids du polymère de propylène cristallin, d'un composé hydrotalcite de formule (1),
(Mg_{y}Zn_{z})₁₋ₓAlₓ(OH)₂(CO₃)_{x/2}.mH₂O (1)
dans laquelle y + z = 1, 0 ≤ y ≤ 0,9, 0,2 ≤ x ≤ 0,8 et m est 0 ou un nombre positif.

2. Composition selon la revendication 1, dans laquelle le composé hydrotalcite (c) présente une surface spécifique BET de 30 m²/g ou inférieure et un diamètre moyen des particules secondaires de 5 µm ou inférieur.

3. Composition selon la revendication 1 ou 2, dans laquelle le composé hydrotalcite est un composé ayant subi un traitement de surface avec au moins un agent de traitement de surface.

4. Composition selon la revendication 3, dans laquelle le ou chaque agent de traitement de surface est choisi parmi les acides gras supérieurs, les sels métalliques d'acides gras supérieurs, les sels métalliques d'acides sulfoniques organiques, les amides d'acides gras supérieurs, les esters d'acides gras supérieurs et les cires.

5. Composition selon l'une quelconque des revendications précédentes, dans laquelle le polymère de propylène (a) est choisi parmi un homopolypropylène, un copolymère séquencé ou aléatoire propylène-éthylène et un copolymère propylène-éthylène-1-butène.

6. Composition selon l'une quelconque des revendications précédentes, dans laquelle le polymère de propylène (a) présente une vitesse de fusion de 0,1 à 100g/minute.

7. Composition selon l'une quelconque des revendications précédentes, qui contient au moins un additif choisi parmi les antioxydants contenant du phénol, les antioxydants contenant du phosphore organique, les antioxydants contenant des thioéthers, les absorbants d'ultraviolet, les stabilisants à la lumière contenant des amines stériquement encombrées ou du nickel, des agents antistatiques, des lubrifiants, des agents de nucléation et des colorants.

8. Composition selon l'une quelconque des revendications précédentes, dans laquelle la quantité du sel d'aluminium (b) est de 0,05 à 0,5 partie en poids pour 100 parties en poids du polymère de propylène (a).

9. Article moulé, fibre, film à orientation biaxiale ou feuille en une composition selon l'une quelconque des revendications 1 à 8.

10. Procédé de fabrication d'un article moulé, ledit procédé comprenant le moulage par injection d'une composition selon l'une quelconque des revendications 1 à 8.
